Europäisches Patentamt

European Patent Office

Office européen des brevets

(19)

(11) Publication number: **0 059 519**
**B1**

(12)

# EUROPEAN PATENT SPECIFICATION

(45) Date of publication of patent specification :
07.11.84

(21) Application number : 82200257.2

(22) Date of filing : 01.03.82

(51) Int. Cl.³ : **A 22 B   7/00, A 22 B   5/08**

(54) System for receiving and positioning slaughter cattle discharged by a processing machine.

(30) Priority : 03.03.81 NL 8101025

(43) Date of publication of application :
08.09.82 Bulletin 82/36

(45) Publication of the grant of the patent :
07.11.84 Bulletin 84/45

(84) Designated contracting states :
AT BE CH DE FR GB IT LI LU NL SE

(56) References cited :
US-A- 2 185 949
US-A- 3 233 283

(73) Proprietor : **MACHINEFABRIEK G.J. NIJHUIS B.V.**
**Parallelweg 4 Postbus 102**
**NL-7100 AC Winterswijk (NL)**

(72) Inventor : **Nijhuis, Gerrit Jan**
**Rusthuisstraat 10**
**NL-7101 JH Winterswijk (NL)**

(74) Representative : **van der Beek, George Frans et al**
**Nederlandsch Octrooibureau Johan de Wittlaan 15**
**P.O. Box 29720**
**NL-2502 LS The Haque (NL)**

Jouve, 18, rue St-Denis, 75001 Paris, France

## Description

The invention relates to a system for receiving and positioning slaughter cattle, more particularly pigs, discharged by a processing machine, like a dehairing machine, linked to a horizontal conveyor belt or table.

Among the known processing machines for slaughter cattle are some which deliver the processed carcass in horizontal direction, whereby the animal leaves the system with the head or tail infront and simultaneously is rotating around a longitudinal axis. An example of such a machine is a dehairing machine working with rotating scrapers. The carcass coming from this machine arrives directly on a table or on a horizontal conveyor belt and must be connected for further processing to spreader, to be submitted to further processing via a transporting means. After leaving said processing machine the carcass falls in an arbitrary way on the table or conveyor belt and special personel is needed to put the pigs straight with the legs to one side and directed the same way. In high production processes this is a serious complication, the more as the carcass leaves the processing machine rather fast and rotating.

It is an object of the present invention to provide a simple system causing the carcasses to arrive automatically in a correct position on the table or belt without the assistance of personnel.

Said object is realized according to the invention in that behind the discharge opening of the processing machine and above the belt or table a receiving tray is placed, said tray having a longitudinal axis extending in the direction of movement of a processed carcass leaving the discharge opening of the processing machine, said tray further having a curved bottom the generating line of which is parallel to the longitudinal axis of the tray, an end wall opposite the discharge opening and an elongated opening in the bottom of the tray extending in the direction of the longitudinal axis of the tray, the curvature of the tray and the size and shape of the elongated opening therein jointly serving to ensure that when the slaughtered animal is discharged in a rotating manner onto the tray through said discharge opening the animal will only pass through the elongated opening whilst lying on its back. The receiving tray, which can have for instance a half cylindrical shape, receives the carcass coming from the processing machine, which carcass does not immediately move through said bottom opening because of its high speed and its rotation. Only after the carcass has come to a rest it will move through said bottom opening and fall on the conveyor belt or table automatically in the correct position.

The carcass discharged into the tray will stop its movements, in particular its rotation by the curved wall of the tray and the carcass then automatically comes to rest with its back against the bottom wall of the tray and its legs directed more or less upwardly.

To quickly stop the rotation it will be advantageous that a bar is positioned at a distance above the bottom of the tray, extending in the same direction as the longitudinal axis of the tray. The legs of the rotating carcass run against this bar, so that the rotation is stopped. This stopping takes place in a position, in which the legs are already directed upwards so that the carcass is lying on its back, which is necessary for passing through said opening.

Because there normally will be some distance between the receiving tray and the conveyor belt or table, preferably an inclined guide plate is positioned directly underneath said opening of the tray, which tray terminates at the conveyor belt or table. The carcass coming through the opening of the receiving tray is thus transported gradually to the conveyor belt or table. If one installs the receiving tray at a small distance above the conveyor belt or table, then such a guide plate is not necessary, but in that case the receiving tray has to be vertically movable to let the carcass pass through.

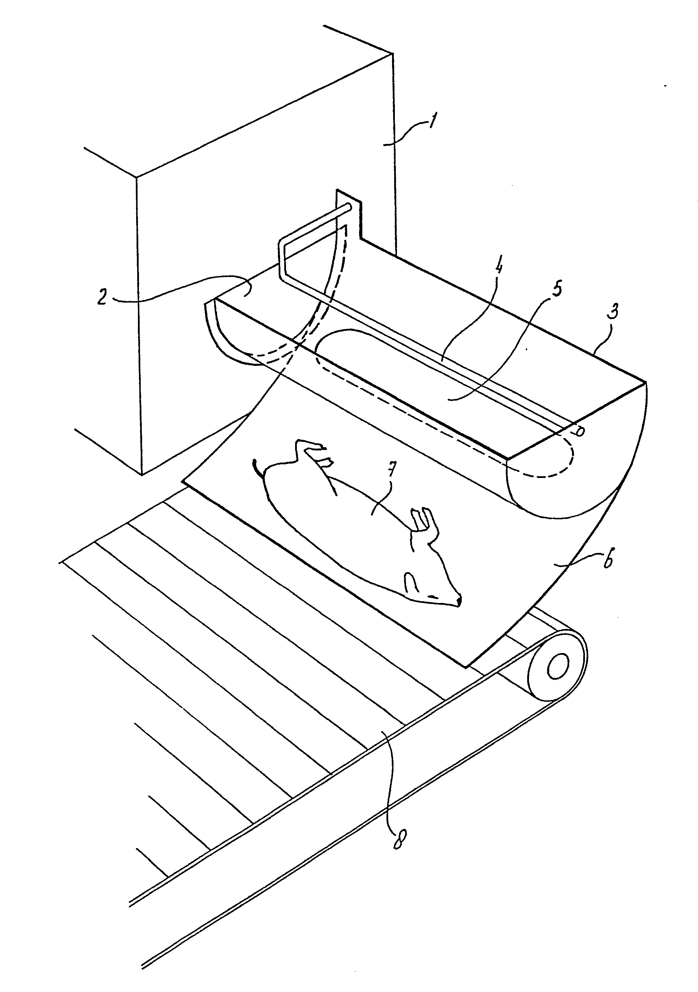

The invention will be explained with reference to the drawing, which shows schematically a perspective view of the system according to the invention.

In the drawing a dehairing machine is indicated by 1. A half cylindrical tray 3 is connected to the discharge opening 2 of said dehairing machine, which tray is provided with a bar 4, positioned approximately along the longitudinal axis of said tray. The bottom of said tray has an opening 5 and the lower wall of the tray is linked to a guide plate 6 positioned such, that the carcass which is coming through the opening 5 can slide over this plate 6 to the conveyor belt 8.

It is possible with the system according to the invention to receive the carcasses which are coming from the dehairing machine and to deliver them gradually onto the conveyor belt or table, such, that further processing operations to be carried out by the present personnel are made easier and said personnel runs non risk. For connecting the spreader for instance to pigs, the tendons in the legs have to be incised. The personnel standing near the belt and carrying out these operations is running some risk in the known systems, because the carcasses are falling down arbitrarily and are put straight in a rough way, thereby eventually knocking the hand in which the person is holding a very sharp knife.

Besides a saving on personnel also an increase of the safety conditions is obtained.

## Claims

1. A system for receiving and positioning slaughter cattle, more particularly pigs (7), discharged rotating about its longitudinal axis by a processing machine (1) such as a dehairing machine, leading to a horizontal conveyor belt or table (8), characterized in that behind the discharge opening (2) of the processing machine (1) and above the belt or table (8) a receiving tray (3) is placed, said tray (3) having a longitudinal axis extending in the direction of movement of a processed carcass leaving the discharge opening (2) of the processing machine (1), said tray (3) further having a curved bottom the generating line of which is parallel to the longitudinal axis of the tray (3) an end wall opposite the discharge opening (2) and an elongated opening (5) in the bottom of the tray extending in the direction of the longitudinal axis of the tray, the curvature of the tray (3) and the size and shape of the elongated opening (5) therein jointly serving to ensure that when the slaughtered animal is discharged in a rotating manner onto the tray (3) through said discharge opening (2) the animal will only pass through the elongated opening (5) whilst lying on its back.

2. A system according to claim 1, characterized in that the receiving tray (3) is provided at a distance above the bottom with a bar (4) extending in the same direction as the longitudinal axis of the tray (3).

3. A system according to claim 1 or 2, characterized in that an inclined guide plate (8) is positioned underneath said opening (5), which plate terminates near the conveyor belt or table (8).

## Ansprüche

1. Vorrichtung zum Übernehmen und Ausrichten von Schlachtviehkörpern, insbesondere von Schweinen (7), die unter Drehung um ihre Längsachse von einer Behandlungsmaschine (1), wie z. B. einer Enthaarungsmaschine entladen werden, an die sich ein waagrechtes Förderband oder ein Tisch (8) anschließt, dadurch gekennzeichnet, daß hinter der Entladeöffnung (2) der Behandlungsmaschine (1) und oberhalb des Bandes oder Tisches (8) eine Aufnahmeschale (3) angeordnet ist, die eine sich in Richtung der Bewegung eines die Entladeöffnung (2) der Behandlungsmaschine (1) verlassenden, behandelten Tierkörpers erstreckende Längsachse und einen gekrümmten Boden aufweist, dessen erzeugende Linie parallel zur Längsachse der Schale (3) verläuft, sowie eine der Entladeöffnung (2) gegenüber angeordnete Abschlußwand und eine sich in Richtung der Schalenlängsachse erstreckende, längliche Öffnung (5) im Schalenboden besitzt, wobei die Krümmung der Schale (3) und die Größe und Gestalt der darin vorgesehenen länglichen Öffnung (5) zusammenwirken, um sicherzustellen, daß das in einer sich drehenden Weise durch die Entladeöffnung (2) auf die Schale (3) entladene, geschlachtete Tier nur dann die längliche Öffnung (5) passiert, wenn es auf seinem Rücken liegt.

2. Vorrichtung nach Anspruch 1, dadurch gekennzeichnet, daß die Aufnahmeschale (3) in einem Abstand über dem Boden mit einer Stange (4) versehen ist, die sich in derselben Richtung wie die Längsachse der Schale (3) erstreckt.

3. Vorrichtung nach Anspruch 1 oder 2, dadurch gekennzeichnet, daß unterhalb der Öffnung (5) eine geneigte Führungsplatte (6) angeordnet ist, die nahe am Förderband oder Tisch (8) endet.

## Revendications

1. Dispositif pour recueillir et positionner des carcasses d'animaux de boucherie, plus particulièrement de porcs (7), sortant en tournant autour de leur axe longitudinal d'une machine de traitement (1), comme une machine à dépiler, menant à une courroie horizontale ou à une table (8), caractérisé en ce que derrière l'ouverture de décharge (2) de la machine de traitement (1) et au-dessus de la courroie ou de la table (8) est placé un plateau récepteur (3), ce plateau (3) présentant un axe longitudinal s'étendant dans la direction de mouvement d'une carcasse traitée quittant l'ouverture de décharge (2) de la machine de traitement (1), ledit plateau (3) présentant, en outre, un fond courbe dont la génératrice est parallèle à l'axe longitudinal du plateau (3), une paroi d'extrémité opposée à l'ouverture de décharge (2) et une ouverture oblongue (5) s'étendant dans le fond du plateau suivant la direction de l'axe longitudinal du plateau, la courbure du plateau (3) ainsi que la grandeur et la forme de l'ouverture oblongue de celui-ci servant conjointement à faire en sorte que quand l'animal abattu est déchargé en tournant sur le plateau (3) à travers ladite ouverture de décharge (2), l'animal ne passe à travers l'ouverture oblongue (5) que lorsqu'il repose sur le dos.

2. Dispositif selon la revendication 1, caractérisé en ce que le plateau récepteur (3) est muni à une certaine distance au-dessus du fond d'une barre (4) s'étendant dans la même direction que l'axe longitudinal du plateau (3).

3. Dispositif selon l'une des revendications 1 ou 2, caractérisé en ce qu'une plaque de guidage inclinée (6) est placée sous ladite ouverture (5), laquelle plaque se termine près de la courroie transporteuse ou table (8).